# EUROPÄISCHE PATENTSCHRIFT

(11) **EP 1 041 321 B1**
(45) Veröffentlichungstag und Bekanntmachung des Hinweises auf die Patenterteilung: **20.04.2005**
(21) Anmeldenummer: 00104620.0
(22) Anmeldetag: 03.03.2000
(51) Int. Cl.: F16J 15/36, F16J 15/38, F16J 15/34

(54) **Gleitringdichtung**
Mechanical seal
Garniture mécanique d'étanchéité

(30) Priorität: 01.04.1999 DE 19914930
(43) Veröffentlichungstag der Anmeldung: 04.10.2000
(73) Patentinhaber: Carl Freudenberg KG, 69469 Weinheim (DE)
(72) Erfinder: Nakano, Kenji, 69469 Weinheim (DE)

(56) Entgegenhaltungen:
- EP-A- 0 547 652
- DE-A- 3 909 100
- US-A- 2 265 951
- US-A- 2 564 070
- US-A- 3 554 559
- US-A- 4 275 889

## Beschreibung

### Technisches Gebiet

Die Erfindung betrifft ein Gleitringdichtungssystem, umfassend einen Gehäuseflansch, einen Gleitring und einen Gegenring wobei der Gleitring und der Gegenring einander mit Dichtflächen relativ verdrehbar und federkraftbeaufschlagt mit axialer Vorspannung dichtend berühren, wobei der Gleitring mittels eines Dichtrings mit einem Mitnehmerring drehfest und dichtend verbunden ist, wobei der Dichtring jeweils ungehaftet zwischen dem Gleitring und dem Mitnehmerring angeordnet ist, wobei der Gleitring, der Dichtring und der Mitnehmerring eine vormontierbare Einheit bilden und wobei die Einheit so ausgebildet ist, dass sie außenumfangsseitig von dem Gehäuseflansch mit radialer Vorspannung drehfest umschlossen ist.

### Stand der Technik

Derartige Gleitringdichtungssysteme sind allgemein bekannt. Dabei ist allerdings zu beachten, dass der Dichtring und der Mitnehmerring miteinander vulkanisiert sind, was in fertigungstechnischer und wirtschaftlicher Hinsicht wenig zufriedenstellend ist.

Aus der US 2,564,070 A ist ein Gleitringdichtungssystem bekannt, bei dem der Dichtring in einer radial gerichteten Ausnehmung zwischen zwei besonders geformten Einzelteile ruht. Diese sind zwischen Gleitring und Mitnehmerring als zusätzliche Elemente der Gleitringdichtung positioniert und führen zu einem komplexen Gesamtaufbau.

Aus der US 2,265,951 A ist ein Gleitringdichtungssystem mit einem Gleitring bekannt, welcher eine Ausnehmung aufweist, in der ein torusartiger Ring positioniert ist. Dieser torusartige Ring soll den Geitring durch Reibungskräfte fixieren.

Aus der US 3,554,559 A ist ein Gleitringdichtungssystem bekannt, bei dem der Gleitring zusammen mit einem Dichtring innerhalb eines Gehäuseteils angeordnet ist.

Die EP-A 0 547 652 offenbart ein Gleitringdichtungssystem, bei dem der Dichtring dem Medium, gegen das abgedichtet werden soll, ungeschützt ausgesetzt ist. Der Dichtring erfährt durch den Mitnehmerring auf der dem Medium abgewandten Seite in einem Teilbereich eine mechanische Unterstützung ist jedoch ansonsten zur dichtenden Anlage an die Umfangsfläche einer Welle ungeführt positioniert.

### Darstellung der Erfindung

Der Erfindung liegt die Aufgabe zugrunde, ein Gleitringdichtungssystem zu realisieren, welches bei einfachem Aufbau nach einfacher Montage eine maximale Dichtungsfunktion gewährleistet.

Diese Aufgabe wird erfindungsgemäß mit den Merkmalen von Anspruch 1 gelöst. Auf vorteilhafte Ausgestaltungen nehmen die Unteransprüche Bezug.

Zur Lösung der Aufgabe ist es vorgesehen, dass der Mitnehmerring einen Mitnehmerflansch aufweist, welcher die einem Medium gegen das abgedichtet werden soll, zugewandte Seite des Dichtrings im Wesentlichen vollständig überdeckt und dass die dem Medium abgewandte Seite des Dichtrings am Gehäuseflansch vollständig anliegt.

Es ist vorgesehen, dass der Mitnehmerring einen Mitnehmerflansch aufweist und dass der Mitnehmerflansch die dem abzudichtenden Medium zugewandte Seite des Dichtrings im Wesentlichen vollständig überdeckt. Gelangt beispielsweise Benzin als abzudichtendes Medium zur Anwendung, wird durch die wesentliche Überdeckung der freien Oberflächen des Dichtrings von dem Mitnehmerflansch ein Quellen des Dichtrings und ein daraus resultierendes Ausweichen der freien Oberflächen weitgehend verhindert / auf ein Minimum reduziert. Während einer langen Gebrauchsdauer wird dadurch, weitgehend unabhängig vom abzudichtenden Medium, eine gleichbleibend drehfeste Zuordnung vom Gleitring zum Mitnehmerring gewährleistet. Der Dichtring weist durch die beschriebene Ausgestaltung des Mitnehmerflanschs nahezu keine freien Oberflächen auf, die mit dem abzudichtenden Medium in Berührung kommen könnten. Ein Aufquellen des Werkstoffs des Dichtrings wird dadurch auf ein Minimum reduziert. In jedem Fall wird durch eine derartige Ausgestaltung sicher vermieden, dass die Vorspannung der Dichtringe zwischen Gleitring und Mitnehmerring durch ein Aufquellen der jeweiligen Dichtringe und Ausweichen der freien Oberflächen reduziert wird und dadurch die Gefahr besteht, dass sich der Gleitring relativ zum Dichtring verdreht. Eine drehfeste Zuordnung des Gleitrings zum Mitnehmerring ist daher stets sicher gewährleistet.

Gelangt beispielsweise als abzudichtendes Medium Benzin zur Anwendung, würde der Dichtring ohne den Mitnehmerflansch, der den Dichtring in seiner Form hält, mit zunehmender Gebrauchsdauer der Gleitringdichtung aufquellen und ausweichen.

Der Dichtring ist jeweils ungehaftet zwischen dem Gleitring und dem Mitnehmerring angeordnet. Der Gleitring, der Dichtring und der Mitnehmerring bilden eine vormontierbare Einheit. Die Einheit ist außenumfangsseitig von einem Gehäuseflansch mit radialer Vorspannung drehfest umschlossen. Bei einer derartigen Ausgestaltung ist von Vorteil, dass die Bestandteile der vormontierbaren Einheit zunächst separat voneinander herstellbar sind und erst im Anschluß an ihre jeweilige Herstellung zu der vormontierbaren Einheit zusammengefügt werden.

Die vormontierte Einheit wird sodann in die Bohrung des Gehäuseflanschs eingepreßt, wobei die Außenumfangsseite des Mitnehmerrings den Gehäuseflansch unmittelbar anliegend berühren könnte. Durch eine derart gestaltete Preßpassung lassen sich hohe radiale Vorspannungen auf den Gleitring erzielen. Der Gleitring läuft daher zuverlässig als Bestandteil der Einheit gemeinsam mit dem Gehäuseflansch um. Eine Relativverdrehung zwischen dem Gleitring und dem Dichtring ist zuverlässig ausgeschlossen.

Die den Einbauraum der Einheit begrenzende Wandung des Gehäuseflanschs und der Dichtring könnten jeweils zur Aufnahme des Gleitrings im Wesentlichen L-förmig und in Richtung des abzudichtenden Mediums offen ausgebildet sein. Durch die L-förmige Gestalt des Dichtrings wird eine direkte Berührung zwischen dem auf Stoß empfindlichen Gleitring und dem ebenfalls unnachgiebigen Gehäuseflansch vermieden. Die kongruente Gestalt der den Einbauraum begrenzenden Wandung ermöglicht eine gute Abstützung des Dichtrings auf seinen dem Gleitring abgewandten Seiten.

Der Dichtring könnte aus einem inkompressiblen Werkstoff bestehen. Ein geringes Aufquellen des Dichtrings bewirkt dadurch, dass der Werkstoff des Dichtrings durch den Mitnehmerflansch nicht ausweichen kann, eine verstärkte elastische Vorspannung zwischen dem Gleitring und dem Mitnehmerring.

Der Dichtring könnte aus einem polymeren Werkstoff, beispielsweise FKM (Flourpolymerisat), bestehen. Der Gleitring könnte demgegenüber aus einem spröden Werkstoff, wie beispielsweise Kohle, bestehen, der einen, beispielsweise aus Siliziumcarbit bestehenden, Gegenring mit seiner Dichtfläche anliegend berühren könnte. Der Mitnehmerring könnte aus einem rostfreien metallischen Werkstoff bestehen.

Die dem abzudichtenden Medium zugewandte Stirnseite des Dichtrings könnte den Mitnehmerflansch unter elastischer Vorspannung dichtend berühren. Hierbei ist von Vorteil, dass ein Aufquellen des Dichtrings bei Beaufschlagung mit dem abzudichtenden Medium verhindert wird. Eine Beaufschlagung des Dichtrings mit dem abzudichtenden Mediums bewirkt durch die Einspannung des Dichtrings in den Mitnehmerring eine sich erhöhende Vorspannung auf den Gleitring.

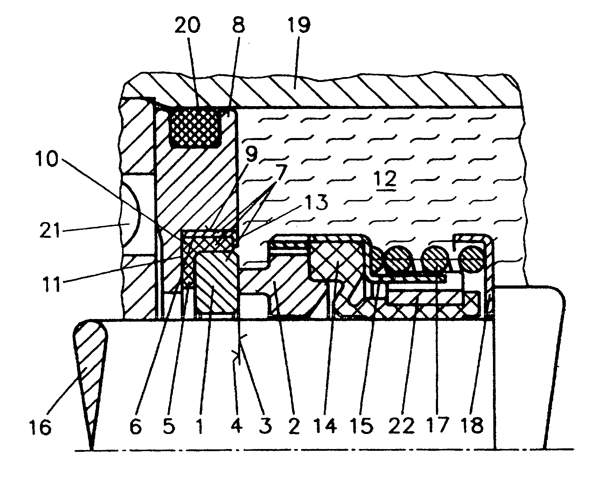

### Kurzbeschreibung der Zeichnung

Ein Ausführungsbeispiel des Gleitringdichtungssystems wird nachfolgend anhand der schematisch dargestellten Figur näher erläutert.

### Ausführung der Erfindung

In der Figur ist ein Ausführungsbeispiel eines Gleitringdichtungssystems gezeigt. Die Gleitringdichtung besteht im Wesentlichen aus dem Gleitring 1 aus Kohle, der sich mit seiner ebenen Dichtfläche 3 an der ebenen Dichtfläche 4 des Gegenrings 2, der aus Siliziumcarbit besteht, unter axialer Vorspannung elastisch dichtend abstützt.

Der Gleitring 1 ist von dem L-förmigen Dichtring 5 umschlossen, der in diesem Ausführungsbeispiel aus FKM besteht.

Die metallischen Bauteile der Gleitringdichtung bestehen aus Edelstahl und sind gegen das abzudichtende Medium 12, beispielsweise Benzin, resistent.

Zur Funktion der Gleitringdichtung wird folgendes ausgeführt:

Der Gegenring 2 ist mittels eines Balgs 14, der ebenfalls wie der Dichtring 5 aus FKM besteht, mit dem als Gehäuse ausgebildeten Winkelblech 15 drehfest verbunden. Der Balg 14 ist durch den Druckring 22 auf die Oberfläche der Welle 16 gepreßt, wobei sich die Druckfeder 17 in axialer Richtung einerseits an einem Radialflansch des Winkelblechs 15 und in axialer Richtung andererseits an einem Federhaltering 18 abstützt.

Der Gleitring 1 ist demgegenüber ungehaftet vom Dichtring 5 umschlossen, wobei der Gleitring 1, der Dichtring 5 und der Mitnehmerring 6 die vormontierbare Einheit 7 bilden und in die Bohrung eines Gehäuseflanschs 8 eingepreßt sind.

Die Abdichtung erfolgt dadurch, dass sich die ebenen Dichtflächen 3, 4 von Gleitring 1 und Gegenring 2 federkraftbeaufschlagt berühren.

Der Mitnehmerring 6, der aus Edelstahl besteht, weist einen Mitnehmerflansch 13 auf, der als Radialflansch ausgebildet ist und die dem Gegenring 2 zugewandte Stirnseite des Dichtrings 5 im Wesentlichen vollständig überdeckt. Dadurch wird ein Aufquellen des Dichtrings 5 während der bestimmungsgemäßen Verwendung der Gleitringdichtung vermieden und eine damit einhergehende Reduzierung der radialen Vorspannung, mit der der Gleitring 1 vom Dichtring 5 umschlossen ist. Bewirkt die geringe Beaufschlagung des Dichtrings 5 mit abzudichtendem Medium 12 dennoch ein Aufquellen, so wird die radiale Vorspannung zwischen dem Gleitring 1 und dem Mitnehmerring 6 erhöht, da das jeweilige Volumen des Einbauraums des Dichtrings 5 im Wesentlichen konstant ist und der Dichtring 5 bei einem Aufquellen, bedingt durch den Mitnehmerflansch 13, nicht auszuweichen vermag.

Der Gehäuseflansch 8 ist in diesem Ausführungsbeispiel in das Pumpengehäuse 19 einer Benzinpumpe eingepreßt und durch einen aus FKM bestehenden O-Ring 20 demgegenüber abgedichtet. Der Gehäuseflansch 8 legt sich mit seiner dem abzudichtenden Medium 12 abgewandten Stirnseite an das Gehäuse eines Wälzlagers 21 an.

## Patentansprüche

1. Gleitringdichtungssystem, umfassend einen Gehäuseflansch (8), einen Gleitring (1) und einen Gegenring (2), wobei der Gleitring (1) und der Gegenring (2) einander mit Dichtflächen (3, 4) relativ verdrehbar und federkraftbeaufschlagt mit axialer Vorspannung dichtend berühren, wobei der Gleitring (1) mittels eines Dichtrings (5) mit einem Mitnehmerring (6) drehfest und dichtend verbunden ist, wobei der Dichtring (5) jeweils ungehaftet zwischen dem Gleitring (1) und dem Mitnehmerring (6) angeordnet ist, wobei der Gleitring (1), der Dichtring (5) und der Mitnehmerring (6) eine vormontierbare Einheit (7) bilden und wobei die Einheit (7) so ausgebildet ist, dass sie außenumfangsseitig von dem Gehäuseflansch (8) mit radialer Vorspannung drehfest umschlossen ist,
**dadurch gekennzeichnet, dass** der Mitnehmerring (6) einen Mitnehmerflansch (13) aufweist, welcher die einem Medium (12), gegen das abgedichtet werden soll, zugewandte Seite des Dichtrings (5) im Wesentlichen vollständig überdeckt und dass die dem Medium abgewandte Seite des Dichtrings (5) am Gehäuseflansch (8) vollständig anliegt.

2. Gleitringdichtungssystem nach Anspruch 1, **dadurch gekennzeichnet, dass** die Außenumfangsseite (9) des Mitnehmerrings (6) an dem Gehäuseflansch (8) unmittelbar anlegbar ist.

3. Gleitringdichtungssystem nach einem der Ansprüche 1 oder 2, **dadurch gekennzeichnet, dass** die Einheit (7) in einen L-förmigen, in Richtung des Mediums (12) offen ausgebildeten Einbauraum (10) mit begrenzender Wandung (11) des Gehäuseflanschs (8) eingebaut ist und der Dichtring (5) zur Aufnahme des Gleitrings (1) jeweils im Wesentlichen L-förmig in Richtung des Mediums (12) offen ausgebildet ist.

4. Gleitringdichtungssystem nach einem der Ansprüche 1 bis 3, **dadurch gekennzeichnet, dass** der Dichtring (5) aus polymerem Werkstoff besteht.

5. Gleitringdichtungssystem nach einem der Ansprüche 1 bis 4, **dadurch gekennzeichnet, dass** der Mitnehmerring (6) aus einem metallischen Werkstoff besteht.

6. Gleitringdichtungssystem nach einem der Ansprüche 1 bis 5, **dadurch gekennzeichnet, dass** der Dichtring (5) auf der dem abzudichtenden Medium (12) zugewandten Seite den Mitnehmerflansch (13) unter elastischer Vorspannung dichtend berührt.

## Claims

1. A mechanical seal system, comprising a housing flange (8), a sliding ring (1) and a counter-ring (2), the sliding ring (1) and the counter-ring (2) sealingly touching each other by means of sealing faces (3, 4) with axial prestress and in a manner such that they can be rotated relative to each other and acted upon by spring force, the sliding ring (1) being connected in a rotationally fixed and sealing manner to a driving ring (6) by means of a sealing ring (5), the sealing ring (5) being arranged, in each case without adhesion, between the sliding ring (1) and the driving ring (6), the sliding ring (1), the sealing ring (5) and the driving ring (6) forming a preassembleable unit (7) and the unit (7) being formed in such a manner that it is enclosed in a rotationally fixed manner with radial prestress on the outer circumference by the housing flange (8), **characterized in that** the driving ring (6) has a driving flange (13) which essentially completely covers that side of the sealing ring (5) which faces a medium (12) from which it is to be sealed, and **in that** that side of the sealing ring (5) which faces away from the medium bears completely against the housing flange (8).

2. A mechanical seal system according to claim 1, **characterized in that** the outer circumferential side (9) of the driving ring (6) can be placed directly against the housing flange (8).

3. A mechanical seal system according to either of claims 1 and 2, **characterized in that** the unit (7) is installed in an L-shaped installation space (10), which is formed in a manner such that it is open in the direction of the medium (12) and has a bounding wall (11) of the housing flange (8), and the sealing ring (5), in order to receive the sliding ring (1), is formed in each case in a manner such that it is open in an essentially L-shaped manner in the direction of the medium (12).

4. A mechanical seal system according to any one of claims 1 to 3, **characterized in that** the sealing ring (5) is composed of polymeric material.

5. A mechanical seal system according to any one of claims 1 to 4, **characterized in that** the driving ring (6) is composed of a metallic material.

6. A mechanical seal system according to any one of claims 1 to 5, **characterized in that** the sealing ring (5), on the side facing the medium (12) to be sealed off, sealingly touches the driving flange (13) under elastic prestress.

## Revendications

1. Système de garniture mécanique d'étanchéité ou système d'étanchéité à bague glissante, comprenant un collet de boîtier (8), une bague glissante (1) et une contre-bague (2), sachant que la bague glissante (1) et la contre-bague (2) entrent mutuellement en contact en étanchéité par des surfaces d'étanchéité (3, 4) avec possibilité de rotation relative et en étant sollicitées par une force de ressort avec précontrainte axiale, sachant que la bague glissante (1) est reliée en solidarité de rotation et en étanchéité à une bague entraîneuse (6) par l'intermédiaire d'une bague d'étanchéité (5), sachant que la bague d'étanchéité (5) est respectivement disposée sans adhérence entre la bague glissante (1) et la bague entraîneuse (6), sachant que la bague glissante (1), la bague d'étanchéité (5) et la bague entraîneuse (6) constituent une unité (7) pouvant être pré-assemblée ou prémontée, et sachant que l'unité (7) est conçue de telle sorte qu'elle est, sur sa circonférence extérieure, enserrée en solidarité de rotation et avec précontrainte radiale par le collet de boîtier (8),
**caractérisé en ce que** la bague entraîneuse (6) présente un collet entraîneur (13) qui recouvre sensiblement totalement le côté de la bague d'étanchéité (5) qui est tourné vers un fluide (12) vis-à-vis duquel l'étanchéité doit être assurée, et **en ce que** le côté de la bague d'étanchéité (5) qui est opposé au fluide s'applique totalement contre le collet de boîtier (8).

2. Système de garniture mécanique d'étanchéité selon la revendication 1, **caractérisé en ce que** le côté circonférentiel extérieur (9) de la bague entraîneuse (6) peut être directement appliqué contre le collet de boîtier (8).

3. Système de garniture mécanique d'étanchéité selon la revendication 1 ou 2, **caractérisé en ce que** l'unité (7) est installée dans un espace d'installation (10) en forme de L, réalisé ouvert en direction du fluide (12) et délimité par une paroi (11) du collet de boîtier (8), et la bague d'étanchéité (5) est, afin de recevoir la bague glissante (1), respectivement réalisée ouverte sensiblement en forme de L en direction du fluide (12).

4. Système de garniture mécanique d'étanchéité selon l'une des revendications 1 à 3, **caractérisé en ce que** la bague d'étanchéité (5) est réalisée en matériau polymère.

5. Système de garniture mécanique d'étanchéité selon l'une des revendications 1 à 4, **caractérisé en ce que** la bague entraîneuse (6) est réalisée en un matériau métallique.

6. Système de garniture mécanique d'étanchéité selon l'une des revendications 1 à 5, **caractérisé en ce que** la bague d'étanchéité (5), sur le côté tourné vers le fluide (12) à isoler, entre en contact étanche avec le collet entraîneur (13) sous précontrainte élastique.
